# EUROPÄISCHE PATENTSCHRIFT

(11) **EP 1 196 721 B1**
(45) Veröffentlichungstag und Bekanntmachung des Hinweises auf die Patenterteilung: **24.05.2006**
(21) Anmeldenummer: 00982990.4
(22) Anmeldetag: 12.10.2000
(51) Int. Cl.: F23N 1/08, F03B 13/10

(54) **VORRICHTUNG ZUR ERZEUGUNG EINER ELEKTRISCHEN SPANNUNG FÜR KOMPONENTEN EINES GASBEHEIZTEN WASSERERHITZERS**
DEVICE FOR GENERATING AN ELECTRICAL VOLTAGE FOR COMPONENTS OF A GAS-FIRED WATER HEATER
DISPOSITIF PERMETTANT DE PRODUIRE UNE TENSION ELECTRIQUE DESTINEE AUX COMPOSANTS D'UN CHAUFFE-EAU CHAUFFE AU GAZ

(30) Priorität: 16.11.1999 DE 19954967
(43) Veröffentlichungstag der Anmeldung: 17.04.2002
(73) Patentinhaber: ROBERT BOSCH GMBH, 70442 Stuttgart (DE)
(72) Erfinder: DE BOER, Evert, Nicolaas, NL-7339 AH Ugchelen (NL); MEIJER, Bemardus, Johanes, NL-5025 JX Tilburg (NL)
(86) Internationale Anmeldenummer: PCT/DE2000/003589
(87) Internationale Veröffentlichungsnummer: WO 2001/036876

(56) Entgegenhaltungen:
- US-A- 4 740 725
- US-A- 4 770 161

## Beschreibung

Die Erfindung geht aus von einer Vorrichtung zur Erzeugung einer elektrischen Spannung für Komponenten eines gasbeheizten Wassererhitzers nach dem Oberbegriff des Anspruchs 1.

### Stand der Technik

Aus US-A-4 770 161 ist eine Vorrichtung zur Erzeugung einer elektrischen Spannung für Komponenten eines gasbeheizten Wassererhitzers bekannt, wobei der Wassererhitzer einen Wärmeübertrager aufweist, der von einem wasserführenden Leitungsstrang durchzogen ist. Im Leitungsstrang des Wassererhitzers ist eine Turbine eines Turbinen-Generators integriert, der beim Öffnen eines Auslassventils am Leitungsstrang eine elektrische Spannung liefert. Die Turbine des Turbinen-Generators ist dabei in einem zum Leitungsstrang geführten Bypass angeordnet.

Aus der US-A-4 740 725 ist ebenfalls bekannt, einen hydraulischen Mikro-Turbinen-Generator zur Erzeugung einer Zündspannung zum Zünden eines Gasbrenners für Wassererhitzer einzusetzen. Der Turbinen-Generators weist ein Generatorgehäuse und ein Leitungsgehäuse für die Turbine auf. Als Vorteil wird darauf hingewiesen, dass durch den hydraulischen Turbinen-Generator auf eine permanente Zündflamme verzichtet werden kann.

Aus der EP 361 333 E geht ferner eine Wasserarmatur für sanitäre Hausinstallationen hervor, wobei in einem Strömungskanal ein von durchströmenden Wasser beaufschlagtes Turbinenrad vorgesehen ist, das einen elektrischen Generator antreibt. Das Turbinenrad ist dabei unmittelbar im Strümungsweg des Wasser führenden Leitungsstrangs angeordnet. Die vom Generator erzeugte Spannung wird dabei zum Laden eines Akkumulators verwendet, der eine Steueranordnung mit Spannung versorgt, die ein Ventil eines Wasserspenders betätigt.

### Vorteile der Erfindung

Die erfindungsgemäße Vorrichtung mit den kennzeichnenden Merkmalen des Anspruchs 1 hat den Vorteil, daß der Turbinen-Generator durch die kompakte Ausführung des Turbinen-Generators ohne Schwierigkeiten in den Bauraum von Wasserheizvorrichtungen eingesetzt werden kann.

Durch die in den Unteransprüchen aufgeführten Maßnahmen sind vorteilhafte Weiterbildungen der erfindungsgemäßen Vorrichtung möglich. Um selbst bei einer geringen Öffnung des Auslaßventils eine ausreichende elektrische Spannung von beispielsweise 1,5 V bereitzustellen, ist es besonders vorteilhaft, über ein Drosselventil den Leitungsstrang erst öffnet, wenn die Turbine des Turbinen-Generators von der erforderlichen Strömungsmenge durchflossen wird. Als zweckmäßig hat sich herausgestellt, das Drosselventil erst bei einem Druck von etwa 250 mbar zu öffnen. Dadurch wird sichergestellt, daß über die Turbine eine Strömungsmenge von ca. 2 bis 3 1/min fließt, die sich zur Erzeugung der erforderlichen Spannung als zweckmäßig erwiesen hat. Durch eine druckabhängige Veränderung des Strömungsquerschnitts des Drosselventils wird außerdem sichergestellt, daß der im Bypass anliegende Druck im wesentlichen konstant bleibt. Dazu ist das Drosselventil mit einer Druckfeder mit entsprechender Federkennlinie beaufschlagt. Um die Turbine mit einer geringen Strömungsmenge zu betreiben, ist im Bypass, der Turbine vorgelagert, eine Düse mit einem Düsenspalt ausgebildet.

Die Erfindung läßt sich nicht nur bei Gasdurchlauferhitzern sondern auch bei anderen Wassererhitzern einsetzen, die mit einem Gasbrenner beheizt werden.

### Zeichnung

Ein Ausführungsbeispiel der Erfindung ist in der Zeichnung dargestellt und in der nachfolgenden Beschreibung näher erläutert.

Es zeigen:
- Figur 1: eine schematische Darstellung eines gasbeheizten Warmwassererhitzers,
- Figur 2: eine Schnittdarstellung durch eine Armatur für die erfindungsgemäße Vorrichtung,
- Figur 3: eine Schnittdarstellung eines Gehäuseteils der Armatur,
- Figur 4: eine Draufsicht auf das Gehäuseteil in Figur 3,
- Figur 5: ein weiteres Gehäuseteil für einen Generator,
- Figur 6: eine Ansicht des Gehäuseteils in Figur 5 in Blickrichtung X,
- Figur 7: einen Ausschnitt einer Schnittdarstellung nach der Linie VII-VII in Figur 6 und
- Figur 8: eine vergrößerte Schnittdarstellung des Ausschnitts A in Figur 2.

### Ausführungsbeispiel

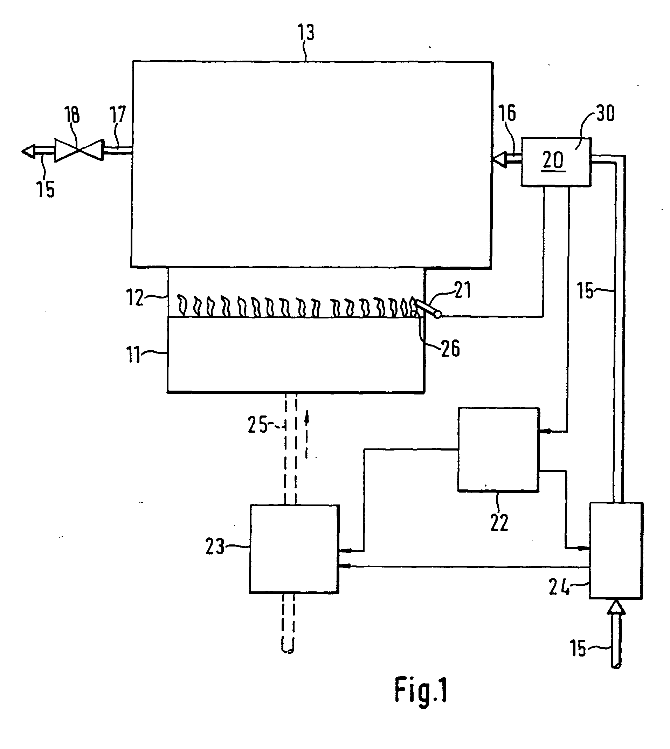

Figur 1 zeigt eine schematische Darstellung eines gasbeheizten Wassererhitzers mit einem Gasbrenner 11, einer Brennkammer 12 und einem Wärmetauscher 13. Der Gasbrenner 11 wird mit einem Brenngas 25 versorgt, das in der Brennkammer 12 verbrennt. Der Wärmetauscher 13 wird von einem wasserführenden Leitungsstrang 15 durchzogen, der in Fließrichtung vor dem Wärmeübertrager 13 eine Einlaßseite 16 (Kaltwasserseite) und in Fließrichtung hinter dem Wärmetauscher eine Auslaßseite 17 (Warmwasserseite) mit einem Auslaßventil 18 (Wasserhahn) aufweist.

An der Einlaßseite 16 befindet sich in Fließrichtung vor dem Wärmetauscher eine Armatur 20 mit einem Turbinen-Generator 30, der von dem im Leitungsstrang 15 strömenden Wasser angetrieben wird und eine elektrische Spannung erzeugt.

Bei Entnahme von Warmwasser wird das Auslaßventil 18 geöffnet, wobei Wasser durch den Leitungsstrang 15 strömt. Mit dem Öffnen des Auslaßventils 18 wird aufgrund der Strömung des Wassers im Leitungstrang 15 der Turbinen-Generator 30 betrieben, der dann die Spannung zur Stromversorgung der elektrischen Komponenten liefert.

Die erzeugte elektrische Spannung wird im vorliegenden Ausführungsbeispiel als Zündspannung für eine Zündelektrode 21 verwendet, wobei an der Zündelektrode 21 ein Zündfunke entsteht, der das Brenngas 25 zündet. Die erzeugte Spannung dient ferner zur Versorgung einer elektronischen Steuerung 22, die in an sich bekannter Weise ein Gasventil 23 in Abhängigkeit von der Stellung eines Wasserventils 24 steuert. Darüber hinaus können weitere, nicht dargestellte Steuerelemente und Sensoren versorgt werden.

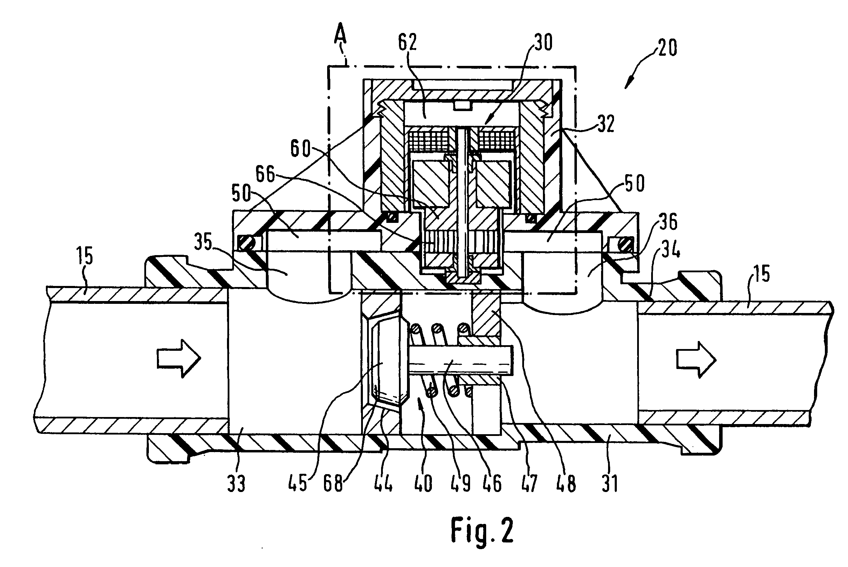

Figur 2 zeigt eine Schnittdarstellung durch die Armatur 20 mit einem Leitungsgehäuse 31 und einem Generatorgehäuse 32. Die Gehäuseteile 31, 32 sind beispielsweise aus Kunststoff hergestellt. Das Leitungsgehäuse 31 besitzt einen einströmseitigen Abschnitt 33 und einen ausströmseitigen Abschnitt 34. Vom einströmseitigen Abschnitt 33 zweigt eine Bypass-Zuströmöffnung 35 und vom ausströmseitigen Abschnitt 34 eine Bypass-Ausströmöffnung 36 ab. Am Leitungsgehäuse 31 ist ferner einströmseitig und ausströmseitig der Leitungsstrang 15 angekoppelt. Die Fließrichtung im Leitungsgehäuse 31 ist durch die Pfeile angegeben.

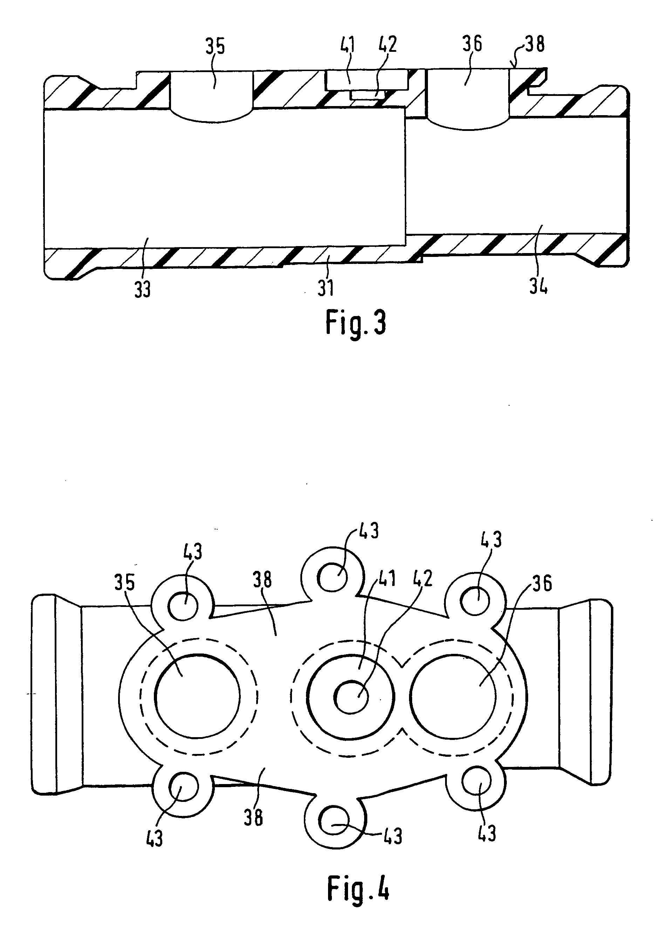

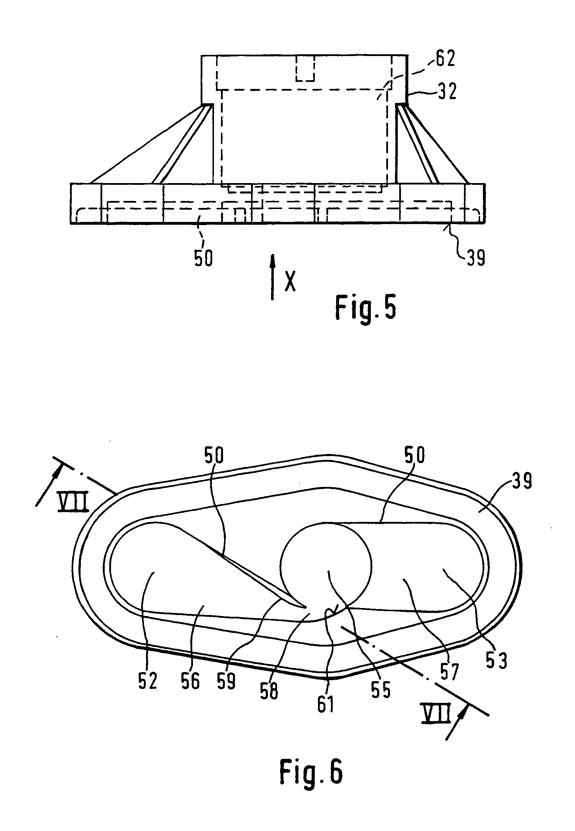

Das Leitungsgehäuse 31 besitzt an den Bypass-Öffnungen 35, 36 eine plane Fläche 38, in die eine Vertiefung 41 mit einem Sackloch 42 für eine Aufnahme 77 eingearbeitet ist (Figur 3 und 8). Zusätzlich ist die plane Fläche 38 mit Bohrungen 43 ausgestattet, in die Befestigungsmittel zum Befestigen des Generatorgehäuse 32 eingreifen (Figur 4). Zum dichten Befestigen des Generatorgehäuses 32 am Leitungsgehäuse 31 ist das Generatorgehäuse 32 mit einer weiteren planen Fläche 39 (Figur 5) ausgeführt, die mit der planen Fläche 38 des Leitungsgehäuse 31 zusammengebracht wird.

Im Leitungsgehäuse 31 ist gemäß Figur 2 ferner ein Drosselventil 40 mit einem Ventilsitz 44, einem Ventilteller 45 und einer Ventilstange 46 angeordnet. Die Ventilstange 46 ist in einer Führung 47 geführt, die über speichenartige Distanzelemente 48 an der Innenwand des Leitungsgehäuses 31 abgestützt sind. Entgegen der Fließrichtung weist der Ventilteller 45 eine kegelstumpfartige Kappe 68 zur Verbesserung der Strömung auf. Der Ventilteller 45 ist mittels einer Druckfeder 49 federkraftbeaufschlagt, wobei die Druckfeder 49 eine derartige Federkennlinie aufweist, daß das Drosselventil 40 erst bei einem Druck von beispielsweise 250 mbar öffnet. Dadurch wird sichergestellt, daß auch bei geringer Öffnung des Auslaßventils 18 eine ausreichende Wassermenge von ca. 2 bis 3 l/min über einen Bypass-Kanal 50 fließt, die notwendig ist, um die erforderliche elektrische Spannung vom Turbinen-Generator 30 zu erzeugen. Voraussetzung ist jedoch, daß das Auslaßventil 18 entsprechend geöffnet ist.

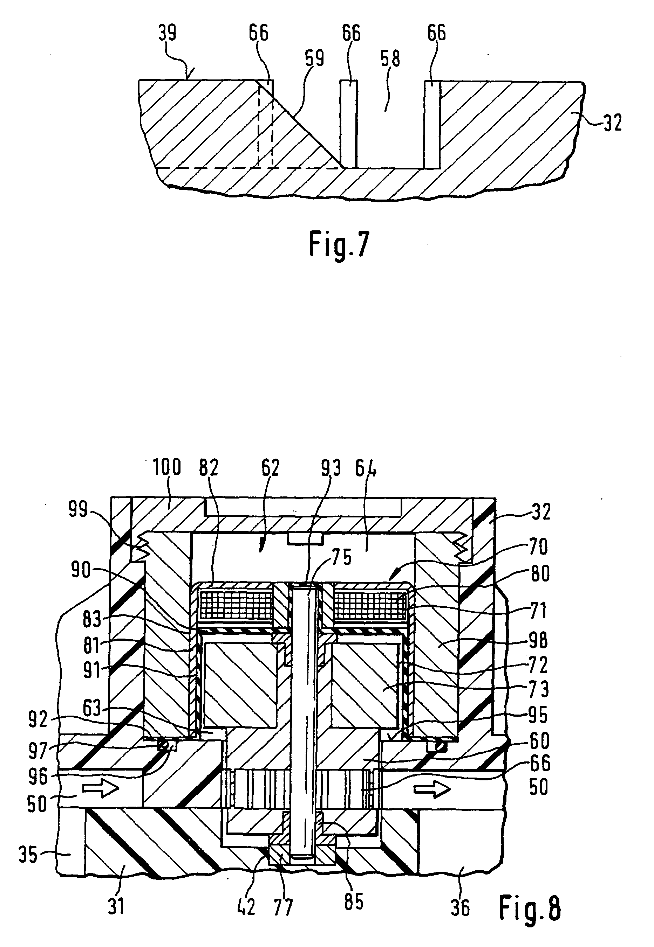

Der Bypass-Kanal 50 ist in die plane Fläche 39 gemäß Figur 5 eingearbeitet, der in Draufsicht in Figur 6 dargestellt ist. Der Bypass-Kanal 50 weist angepaßt an die Zuströmöffnung 35 und die Ausströmöffnung 36 einen halbkreisförmigen Anfang 52 und ein halbkeisförmiges Ende 53 auf. Dazwischen liegt eine Aufnahmebohrung 55 für ein später beschriebenes Turbinenrad 60 mit Turbinenschaufeln 66. Der Bypass-Kanal 50 weist ferner einen Zuström-Kanal 56 und einen Abström-Kanal 57 auf. Der Zuström-Kanal 56 verjüngt sich von der Öffnung am Anfang 52 an kontinuierlich bis zu einem Düsenspalt 58. Der Düsenspalt 58 ist im Querschnitt mit einer Schräge 59 versehen. Der Verlauf der Schräge 59 geht aus Figur 7 hervor. Danach ist die Schräge 59 beispielsweise mit einem Winkel von 20 Grad an den Abstand zwischen den Turbinenschaufeln 66 angepaßt und verläuft vom Kopf der einen Turbinenschaufel zum Fuß der benachbarten Turbinenschaufel. Dadurch entspricht die Querschnittsfläche des Düsenspalts 58 etwa dem 1,5-fachen der Eintrittsfläche zwischen zwei benachbarten Turbinenschaufeln 66. In Strömungsrichtung hinter dem Düsenspalt 58 befindet sich eine gebogene Strömungsfläche 61, die radial in Richtung der Turbinenschaufeln 66 des Turbinenrades 60 weist.

Einzelheiten des Turbinen-Generators 30 zeigt Figur 8. Das Generatorgehäuse 32 weist eine Kammer 62 mit einem rotorseitigen Kammerabschnitt 63 und einem statorseitigen Kammerabschnitt 64 auf. In der Kammer 62 befindet sich ein Generator 70 mit einem Stator 71 und einem Rotor 72. Der Rotor 72 ist ein radial magnetisierter Permanentmagnet 73, der zusammen mit dem Turbinenrad 60 auf einer feststehenden Welle 75 drehbar gelagert ist. Die Welle 75 in dabei fest mit der Aufnahme 77 verbunden, die ebenfalls fest im Sackloch 42 des Leitungsgehäuses 31 sitzt. Auf der Welle 75 laufen zwei Lager 85, die mit dem Turbinenrad 60 drehfest verbunden. Dadurch läuft das Turbinenrad 60 zusammen mit dem Rotor 72 auf der Welle 75. Es ist aber genauso denkbar, das Turbinenrad 60 und den Rotor 72 drehfest auf der Welle 75 anzuordnen und die Welle 75 drehbar zu lagern.

Der Stator 71 besitzt eine Erregerwicklung 80 mit klauenpolartigen Magnetleitblechen 81, die jeweils radiale Abschnitte 82 und axiale Abschnitte 83 aufweisen. Die axialen Abschnitte 83 reichen dabei axial bis über den Permanentmagnet 73 und dienen dazu, das Magnetfeld des Permanentmagneten 73 zur außerhalb des Magnetfeldes liegenden Erregerwicklung 80 zu leiten.

Zwischen dem Stator 71 und dem Rotor 72 ist eine topfförmige Trennkappe 90 mit einem axialen Abschnitt 91, einem radialen Dichtflansch 92 und einer weiteren Aufnahme 93 angeordnet. Die Trennkappe 90 trennt den rotorseitigen Kammerabschnitt 63 von dem statorseitigen Kammerabschnitt 64 hermetisch ab. Dadurch ist es möglich, daß der rotorseitige Kammerabschnitt 63 mit Wasser beaufschlagt sein kann. Die weitere Aufnahme 93, die in die Trennkappe 90 eingeformt ist, dient zur statorseitigen Aufnahme der feststehenden Welle 75. Dadurch ist die Welle 75 zum statorseitigen Kammerabschnitt 64 hin ebenfalls abgedichtet. Somit ist bei dem vorliegenden Turbinen-Generator 30 lediglich die beschriebene Abdichtung mittels der Trennkappe 90 zum Stator 71 hin erforderlich. Es sind keine Dichtungen für rotierende Teile notwendig.

Das Generatorgehäuse 32 weist in der Kammer 62 einen Boden 95 auf, in dem eine ringförmige Vertieferung 96 eingearbeitet ist, in der ein Dichtring 97 liegt. Zum Abdichten ist in die Kammer 62 des Generatorgehäuses 32 eine Hülse 98 eingesetzt, die auf den Dichtflansch 92 der Trennkappe 90 drückt. Die Innenwand der Hülse 98 dient gleichzeitig zur Aufnahme der axialen Abschnitte 83 der Magnetleitbleche 81, die somit zwischen der Hülse 98 und der Trennkappe 90 befestigt sind. Damit kein magnetischer Kurzschluß zwischen den Magnetleitblechen 81 entsteht, sind die mit den Magnetleitblechen 81 in Verbindung stehenden Bauteile aus nichtmagnetischen Materialien, beispielsweise aus Kunststoff ausgeführt.

Zum Befestigen der Trennkappe 90 weist die Kammer 62 am oberen Abschnitt ein Gewinde 99 auf, in das ein ebenfalls mit einem Gewinde versehener Deckel 100 einschraubbar ist. Durch das Einschrauben des Deckels 100 wird die Hülse 98 gegen den Dichtflansch 92 der Trennkappe 90 gedrückt, so daß die erforderliche Dichtung zwischen dem rotorseitigen Kammerabschnitt 63 und dem statorseitigen Kammerabschnitt 64 am Boden 95 des Generatorgehäuses 32 entsteht.

## Patentansprüche

1. Vorrichtung zur Erzeugung einer elektrischen Spannung für Komponenten eines Wassererhitzers mit einem Wärmeübertrager, der von einem wasserführenden Leitungsstrang mit einem Auslassventil durchzogen ist, wobei eine Turbine eines Turbinen-Generators in den Leitungsstrang integriert ist, der beim Öffnen des Auslassventils die elektrische Spannung liefert, und wobei die Turbine (60) des Turbinen-Generators (30) in einem zum Leitungsstrang (15) geführten Bypass (50) angeordnet ist, **dadurch gekennzeichnet, dass** ein Leitungsgehäuse (31) und ein Generatorgehäuse (32) vorgesehen sind und dass der Bypass (50) im Generatorgehäuse (32) ausgebildet ist.

2. Vorrichtung nach Anspruch 1, **dadurch gekennzeichnet, daß** der Turbinen-Generator (30) in Fließrichtung des Wassers vor dem Wärmeübertrager (13) angeordnet ist.

3. Vorrichtung nach Anspruch 1, **dadurch gekennzeichnet, daß** im Leitungsstrang (15) ein Drosselventil (40) angeordnet ist, das derart bemessen ist, daß im Bypass (50) an der Turbine (60) ein im wesentlichen konstanter Wasserdruck unabhängig von der Stellung des Auslaßventils (18) anliegt.

4. Vorrichtung nach Anspruch 3, **dadurch gekennzeichnet, daß** der Bypass (50) und das Drosselventil (40) derart aufeinander abgestimmt sind, daß über die Turbine (60) eine im wesentlichen konstante Strömungsmenge fließt.

5. Vorrichtung nach Anspruch 1, **dadurch gekennzeichnet, daß** im Bypass (50) zuströmseitig ein sich verengender Bypass-Kanal (56) mit einem vor der Turbine (60) liegenden Düsenspalt (58) ausgebildet ist.

6. Vorrichtung nach Anspruch 5, **dadurch gekennzeichnet, daß** der Düsenspalt (58) eine Schräge (59) aufweist, deren Richtung zwischen zwei benachbarten Turbinenschaufeln (66) verläuft.

7. Vorrichtung nach Anspruch 5, **dadurch gekennzeichnet, daß** in Strömungsrichtung hinter dem Düsenspalt (58) eine Strömungsfläche (61) im Bypass (50) ausgebildet ist, die radial in Richtung der Turbinenschaufeln (66) weist.

8. Vorrichtung nach Anspruch 1, **dadurch gekennzeichnet, daß** im Leitungsgehäuse (31) vor dem Drosselventil (40) ein Bypass-Einlaß (35) und hinter dem Drosselventil (40) ein Bypass-Auslaß (36) vorgesehen sind.

9. Vorrichtung nach Anspruch 1, **dadurch gekennzeichnet, daß** das Leitungsgehäuse (31) mit einer ersten planen Fläche (38) und das Generatorgehäuse (32) mit einer weiteren planen Fläche (39) ausgebildet sind, wobei die beiden planen Flächen als Verbindungsfläche dienen, und daß der Bypass (50) in die am Generatorgehäuse (32) ausgebildete plane Fläche (39) eingearbeitet ist.

10. Vorrichtung nach Anspruch 1, **dadurch gekennzeichnet, daß** das Generatorgehäuse (32) eine Kammer (62) aufweist, in der ein Rotor (72) zusammen mit der Turbine (60) läuft, daß in axialer Richtung ein Stator (71) in der Kammer (62) angeordnet ist, und daß zwischen Stator (71) und Rotor (72) eine Trennkappe (90) ausgebildet ist, die einen mit Wasser beaufschlagbaren Kammerabschnitt (63) hermetisch von einem trockenen Kammerabschnitt (64) trennt, wobei im trockenen Kammerabschnitt (64) der Stator (72) fixiert ist.

## Claims

1. Apparatus for generating an electrical voltage for components of a water heater having a heat exchanger through which a water-bearing line section with an outlet valve passes, with a turbine of a turbine generator being integrated in the line section and the turbine generator providing the electrical voltage when the outlet valve is opened, and with the turbine (60) of the turbine generator (30) being arranged in a bypass (50) which is routed to the line section (15), **characterized in that** a line housing (31) and a generator housing (32) are provided, and **in that** the bypass (50) is formed in the generator housing (32).

2. Apparatus according to Claim 1, **characterized in that** the turbine generator (30) is arranged upstream of the heat exchanger (13) in the direction of flow of the water:

3. Apparatus according to Claim 1, **characterized in that** a throttle valve (40) is arranged in the line section (15) and is dimensioned in such a way that a substantially constant water pressure prevails at the turbine (60) in the bypass (50), irrespective of the position of the outlet valve (18).

4. Apparatus according to Claim 3, **characterized in that** the bypass (50) and the throttle valve (40) are matched to one another in such a way that there is a substantially constant flow rate across the turbine (60).

5. Apparatus according to Claim 1, **characterized in that** a tapering bypass channel (56) having a nozzle gap (58) upstream of the turbine (60) is formed at the inflow end of the bypass (50).

6. Apparatus according to Claim 5, **characterized in that** the nozzle gap (58) has a slope (59) which runs in a direction between two adjacent turbine blades (66).

7. Apparatus according to Claim 5, **characterized in that** a flow surface (61) is formed in the bypass (50) in the direction of flow downstream of the nozzle gap (58) and points radially in the direction of the turbine blades (66).

8. Apparatus according to Claim 1, **characterized in that** a bypass inlet (35) is provided in the line housing (31) upstream of the throttle valve (40), and a bypass outlet (36) is provided in the line housing (31) downstream of the throttle valve (40).

9. Apparatus according to Claim 1, **characterized in that** the line housing (31) is formed with a first planar surface (38), and the generator housing (32) is formed with a further planar surface (39), the two planar surfaces serving as connecting surfaces, and **in that** the bypass (50) is incorporated in the planar surface (39) which is formed on the generator housing (32).

10. Apparatus according to Claim 1, **characterized in that** the generator housing (32) has a chamber (62) in which a rotor (72) runs together with the turbine (60), **in that** a stator (71) is arranged in the chamber (62) in the axial direction, and **in that** a separating cap (90) is formed between the stator (71) and the rotor (72) and hermetically separates a chamber section (63) which can be supplied with water from a dry chamber section (64), the stator (72) being fixed in the dry chamber section (64).

## Revendications

1. Dispositif pour générer une tension électrique pour des composants d'un chauffe-eau comprenant un échangeur de chaleur traversé par une conduite véhiculant de l'eau munie d'une soupape d'échappement, dans lequel une turbine d'un générateur à turbine est intégrée dans la conduite qui lors de l'ouverture de la soupape d'échappement fournit la tension électrique, et la turbine (60) du générateur à turbine (30) est disposée dans un by-pass (50) s'étendant jusqu'à la conduite (15),
**caractérisé en ce qu'**
un boîtier de conduite (31) et un boîtier de générateur (32) sont prévus et le by-pass (50) est formé dans le boîtier de générateur (32).

2. Dispositif selon la revendication 1,
**caractérisé en ce que**
le générateur de turbine (30) est disposé dans le sens d'écoulement de l'eau en amont de l'échangeur (13).

3. Dispositif selon la revendication 1,
**caractérisé en ce que**
dans la conduite (15) une soupape d'étranglement (40) est dimensionnée de sorte qu'une pression d'eau pour l'essentiel constante s'éxerce dans le by-pass (50) sur la turbine (60) indépendamment de la position de la soupape d'échappement (18).

4. Dispositif selon la revendication 3,
**caractérisé en ce que**
le by-pass (50) et la soupape d'étranglement (40) sont adaptés l'un à l'autre afin qu'un débit d'écoulement pour l'essentiel constant s'écoule à travers la turbine (60).

5. Dispositif selon la revendication 1,
**caractérisé en ce que**
dans le by-pass (50), côté admission, est formé un canal de by-pass (56) avec une fente de buse (58) située en amont de la turbine (60).

6. Dispositif selon la revendication 5,
**caractérisé en ce que**
la fente de buse (58) présente un chanfrein (59) dont la direction s'étend entre deux aubes de turbine (66) voisines.

7. Dispositif selon la revendication 5,
**caractérisé en ce que**
dans le sens d'écoulement, en aval la fente de buse (58), est formée une surface d'écoulement (61) dans le by-pass (50) qui est dirigée radialement en direction des aubes de turbine (66).

8. Dispositif selon la revendication 1,
**caractérisé en ce qu'**
on prévoit une entrée de by-pass (35) et en aval de la soupape d'étranglement (40) une sortie de by-pass (36).dans le boîtier de conduite (31), en amont de la soupape d'étranglement (40).

9. Dispositif selon la revendication 1,
**caractérisé en ce que**
le boîtier de conduite (31) est muni d'une première surface plane (38) et le boîtier de générateur (32) d'une autre surface plane (39), les deux surfaces planes servant de surfaces de jonction, et le by-pass (50) est intégré dans la surface plane (39) formée sur le boîtier de générateur (32).

10. Dispositif selon la revendication 1,
**caractérisé en ce que**
le boîtier de générateur (32) présente une chambre (62) dans laquelle tourne un rotor (72) conjointement avec la turbine (60), dans la direction axiale un stator (71) est disposé dans la chambre (62), et entre le stator (71) et le rotor (72) un capuchon de séparation (90) sépare hermétiquement une partie de chambre (63) pouvant être alimentée en eau d'une partie de chambre (64) sèche, le stator (72) étant fixé dans la partie de chambre (64) sèche.
